# EUROPÄISCHE PATENTANMELDUNG

(11) **EP 4 711 076 A1**
(43) Veröffentlichungstag der Anmeldung: **18.03.2026**
(21) Anmeldenummer: 25200943.6
(22) Anmeldetag: 09.09.2025
(51) Int. Cl.: B23Q 1/54, B23Q 5/56, B23Q 16/02

(54) **SCHWENKEINHEIT FÜR EINE WERKZEUGMASCHINE**

(30) Priorität: 12.09.2024 DE 102024126291; 12.09.2024 DE 202024105241 U
(71) Anmelder: Starrag GmbH, 09117 Chemnitz (DE)
(72) Erfinder: Hoppe, Thomas, 04600 Altenburg (DE); Haubold, Uwe, 09212 Limbach-Oberfrohna (DE); Frost, Klaus, 01113 Chemnitz (DE); Dr. Richter, Markus, 09212 Limbach-Oberfrohna (DE)
(74) Vertreter: Rumrich, Gabriele

(57) **Zusammenfassung**

Die Erfindung betrifft eine Schwenkeinheit für eine Werkzeugmaschine zur Aufnahme wenigstens eines Werkstücks, wobei die Schwenkeinheit einen Schwenkbalken aufweist und der Schwenkbalken um eine horizontal ausgerichtete Schwenkachse (S) schwenkbar ist, wobei dazu an einem Endabschnitt der Schwenkeinheit eine Antriebseinheit zum schwenkbaren Antrieb des Schwenkbalken um die horizontale Achse (S) vorgesehen ist, wobei die Antriebseinheit mittels eines Kegelradgetriebes mit dem Schwenkbalken verbunden ist, wobei die Antriebseinheit einen ersten Antriebsmotor mit einem ersten Kegelritzel und einen zweiten Antriebsmotor mit einem zweiten Kegelritzel aufweist, wobei das erste und zweite Kegelritzel mit einem, mit dem Schwenkbalken verbundenen, Tellerrad zur Übertragung der Schwenkbewegung von der Antriebseinheit zum Schwenkbalken in Eingriff stehen, wobei das Tellerrad sowie die Antriebseinheit an einer Seite des Schwenkbalkens miteinander in Eingriff stehend zur Übertragung der Schwenkbewegung um die Schwenkachse angeordnet sind und dass der erste Antriebsmotor und der zweite Antriebsmotor gegeneinander verspannt. (**Figur 3**)

## Beschreibung

Die Erfindung betrifft eine Schwenkeinheit für eine Werkzeugmaschine nach dem Oberbegriff des ersten Patentanspruchs.

Für die Bearbeitung von Werkstücken in einer Aufspannung in einer Werkzeugmaschine findet bevorzugt eine fünfte NC-Achse eines Bearbeitungszentrums Anwendung. Dazu kann ein Rundtisch (Achse 4) auf einem schwenkbaren Balken in Form einer Schwenkbrücke (Achse 5) angeordnet sein. Die Bewegungskraft zum Bewegen der Schwenkbrücke, die auch als Schwenkträger oder schwenkbarer Werkstückträger bezeichnet wird, wird insbesondere über ein Zwischengetriebe zwischen Motor und Schwenkbrücke erzeugt.

Die Anforderung an einen Antrieb für eine derartige Schwenkeinheit ist einerseits eine präzise spielfreie Positionierung der Schwenkeinheit und andererseits die Übertragung von hohen Bearbeitungskräften und Vorschubkräften, wobei sich der Balken durch seinen Antrieb nicht elastisch verformen soll, da Verformungen zu einer fehlerhaften Bearbeitung von Werkstücken führen.

Dabei ist nicht nur die statische Steifigkeit der Schwenkeinheit von Bedeutung, sondern auch die Steifigkeit des Antriebsstranges. Dies ist bei der Regelung und hochgenauen Einstellung von mikrometergenauen Positionen von Bedeutung.

Je nach Anforderung muss die Schwenkeinheit eine hohe Steifigkeit aufweisen und eine hohe Positioniergeschwindigkeit ermöglichen. Herkömmliche Antriebskonzepte gemäß dem Stand der Technik weisen jedoch nicht die notwendige Leistungsdichte und/oder Steifigkeit auf.

Bekannte Anordnungen gemäß dem Stand der Technik basieren insbesondere auf zwei Prinzipien. Das erste Prinzip ist ein direkter Antrieb, bei dem der Motor oder Rotor direkt mit dem schwenkbaren Balken der Schwenkeinheit verbunden ist. Dieser Motor kann auf einer Seite oder auch auf beiden Seiten der Schwenkeinheit angebracht sein. Ein beidseitiger Direktantrieb unterbindet eine Verwindung des Schwenkbalkens. Dieses Antriebsprinzip stellt das Optimum eines steifen spielfreien Antriebes dar. Nachteilig sind jedoch hohe Kosten einer solchen Ausgestaltung. Zusätzlich sind in Bezug auf Werkstückgrößen bzw. Massen Grenzen der Wirtschaftlichkeit und Leistungsfähigkeit gesetzt.

Der indirekte Antrieb ist das zweite genutzte Prinzip. Hierbei ist zwischen dem Antriebsmotor und dem schwenkbaren Balken ein Getriebe angeordnet. Getriebe sind spielbehaftet und weisen eine, je nach Getriebeart, deutlich geringere Steifigkeit auf. Jedoch können mit Getrieben hohe Kräfte wirtschaftlich erzeugt werden, um hohe Massen bewegen zu können.

Bekannt ist, dass auch bei diesem Prinzip an beiden Seiten des schwenkbar gelagerten Balkens ein Antrieb sitzen kann. Mit der Verspannung dieser Antriebe kann das Spiel aus dem Getriebe herausgenommen werden. Nachteilig bei dieser Ausgestaltung ist, dass der Balken der Schwenkachse durch die beidseitig eingeleiteten Drehmomente elastisch verformt wird.

Aus der Druckschrift DE 19622060 C1 ist beispielsweise ein Antriebsaggregat, insbesondere für Arbeitstische von Werkzeugmaschinen bekannt, mit dem der Arbeitstisch um eine horizontale Schwenkachse schwenkbar ist. Das Antriebsaggregat besteht aus einem Antriebsmotor und einer Getriebeanordnung mit zwei gegeneinander verspannbaren Getriebezügen, deren Abtriebsritzel gemeinsam mit einer Verzahnung am anzutreibenden Bauteil in Eingriff sind. Eine hohe Positioniergenauigkeit und hohe Steifigkeit gegen Torsion bei geringem Einbauraum soll dadurch ermöglicht werden, dass jeder Getriebezug ein hochübersetzendes Kompaktgetriebe in Form eines Zykloidgetriebes enthält, dass die Antriebswellen der beiden Kompaktgetriebe über einen gemeinsamen Zahnriemen vom Antriebsmotor angetrieben sind und dass jedes Kompaktgetriebe mindestens ein Stellelement zum Verspannen der beiden Getriebezüge enthält. Das hier verwendete Zykloidgetriebe ist zur Übertragung höherer Axialkräfte jedoch nicht geeignet.

Aus der Druckschrift EP 2 113 334 B1 ist ein Bearbeitungszentrum zum Bohren, Fräsen oder Drehen oder Schleifen mit einer um eine horizontale Achse schwenkbar zwischen zwei Lagerwandungen gelagerten Schwenkbrücke, mit
wenigstens einem Antriebszahnkranz bekannt, wobei der Antriebszahnkranz der an einem scheibenartigen Anschlussstück der Schwenkbrücke angebracht ist, mit wenigstens einem Antriebssystem, das außen an der Lagerwandung angebracht ist und mit dem Antriebszahnkranz der Schwenkbrücke in einer Wirkverbindung steht.

Durch die beidseitige Anordnung der Antriebe kann dies jedoch zu einer elastischen Verformung der Schwenkbrücke führen.

Die Druckschrift CN 2 22 176 704 U offenbart eine weitere Schwenkbrücke mit einem beidseitigen Antrieb unter Verwendung eines Kegelritzels, was auch in diesem Stand der Technik zu einer elastischen Verformung der Schwenkbrücke führt.

Aufgabe der Erfindung ist es, eine Schwenkeinheit für eine Werkzeugmaschine zu entwickeln, welche einen Balken der Schwenkeinheit in sich spielfrei antreibt, den Schwenkbalken jedoch nicht elastisch verformt und zusätzlich eine hohe Leistungsdichte im Verhältnis zum Bauraum aufweist.

Diese Aufgabe wird mit den Merkmalen des ersten Patentanspruchs gelöst.

Vorteilhafte Ausgestaltungen ergeben sich aus den Unteransprüchen.

Die erfindungsgemäße Schwenkeinheit für eine Werkzeugmaschine zur Aufnahme wenigstens eines Werkstücks weist einen Schwenkbalken auf, wobei der Schwenkbalken um eine horizontal ausgerichtete Schwenkachse schwenkbar ist. Dazu ist an einem Endabschnitt der Schwenkeinheit eine Antriebseinheit zum schwenkbaren Antrieb des Schwenkbalken um die horizontale Achse vorgesehen. Erfindungsgemäß ist die Antriebseinheit mittels eines Kegelradgetriebes mit dem Schwenkbalken verbunden, wobei die Antriebseinheit einen ersten Antriebsmotor mit einem ersten Kegelritzel und einen zweiten Antriebsmotor mit einem zweiten Kegelritzel aufweist derart, dass das erste und zweite Kegelritzel mit einem, mit dem Schwenkbalken verbundenen, Tellerrad zur Übertragung der Schwenkbewegung von der Antriebseinheit zum Schwenkbalken in Eingriff stehen, wobei das Tellerrad sowie die Antriebseinheit an einer Seite des Schwenkbalkens miteinander in Eingriff stehend zur Übertragung der Schwenkbewegung um die Schwenkachse angeordnet sind. Der erste Antriebsmotor und der zweite Antriebsmotor sind gegeneinander verspannt. Durch den gleichzeitigen Eingriff der Kegelritzel in das Tellerrad kann dem Spiel im Kegelradgetriebe entgegengewirkt werden.

Diese Verspannung führt zur Erhöhung der Genauigkeit und wird mittels einer elektrischen Steuerung realisiert.

Besonders bevorzugt ist das Kegelradgetriebe in Form eines Spiralkegelradgetriebes mit zwei spiralverzahnten Kegelritzeln ausgebildet.

Die Antriebsmotoren der Antriebseinheit sind in einer vorteilhaften Ausgestaltung v-förmig zueinander angeordnet, wobei auch anderweitige Positionen wie beispielsweise gegenüberliegend oder L-förmig zueinander denkbar sind.

Besonders bevorzugt ist der Schwenkbalken in einem ersten und zweiten Schenkel gelagert, wobei in einem der Schenkel das, mit dem Schwenkbalken verbundene Tellerrad angeordnet ist. Mit der einseitigen Anordnung und Krafteinleitung ist ein Verwinden des Schwenkbalken, wie es bei beidseitigen Antrieben mit Getrieben erfolgt ausgeschlossen. Die Antriebseinheit ist demzufolge ebenfalls an dem, das Tellerrad aufnehmenden, Schenkel des Schwenkbalkens angeordnet.

Zur Reduzierung der benötigten Motorleistung sind in einer vorteilhaften Ausgestaltung der erste und/oder zweite Antriebsmotor mit einem Vorsatzgetriebe ausgerüstet.

Besonders vorteilhaft ist die Verwendung eines Planetengetriebes als Vorsatzgetriebe. Durch den Einsatz eines Planetengetriebes kann der benötigte Bauraum des Antriebsmotors reduziert werden.

Besonders bevorzugt ist auf dem Schwenkbalken ein Drehtisch zur Aufnahme einer Palette zum Aufspannen von wenigstens einem Werkstück direkt auf dieser Palette oder innerhalb einer Vorrichtung angeordnet. Eine derart ausgestaltete Schwenkeinheit ermöglicht eine 5-Achs-Bearbeitung von wenigstens einem aufgespannten Werkstück.

In einer vorteilhaften Ausgestaltung der Schwenkeinheit ist diese auf einem Z-Schlitten einer Werkzeugmaschine angeordnet und in Z-Richtung verfahrbar.

Durch die direkte Verbindung des Motors über die verschiedenen Getriebestufen, wird die Sicherheitsklemmung über die Motorbremse realisiert. Eine zusätzliche Sicherheitsklemmung wird daher hinfällig.

Mit der vorliegenden Erfindung wird eine Spielfreiheit im Antrieb erreicht, ohne eine Verspannung des Schwenkbalkens zu erzeugen. Die Schwenkeinheit und insbesondere das Kegelradgetriebe weist insgesamt eine hohe Steifigkeit auf und lässt sich platzsparend bei hoher Leistungsdichte und sehr guter Wirtschaftlichkeit aufbauen.

Die Erfindung wird nachfolgend an einem Ausführungsbeispiel und zugehörigen Zeichnungen näher erläutert.

Es zeigen:
- Figur 1: eine erfindungsgemäße Schwenkeinheit mit Dreheinheit und Antriebseinheit,
- Figur 2: eine Schwenkeinheit aus Blickrichtung einer Frässpindel in einem Bearbeitungszentrum,
- Figur 3: eine Antriebseinheit mit einem ersten Antriebsmotor und einem zweiten Antriebsmotor auf einem Tellerrad,
- Figur 4: eine Schnittdarstellung der Schwenkeinheit,
- Figur 5: den Kraftfluss in einer Schwenkeinheit gemäß Figur 4.

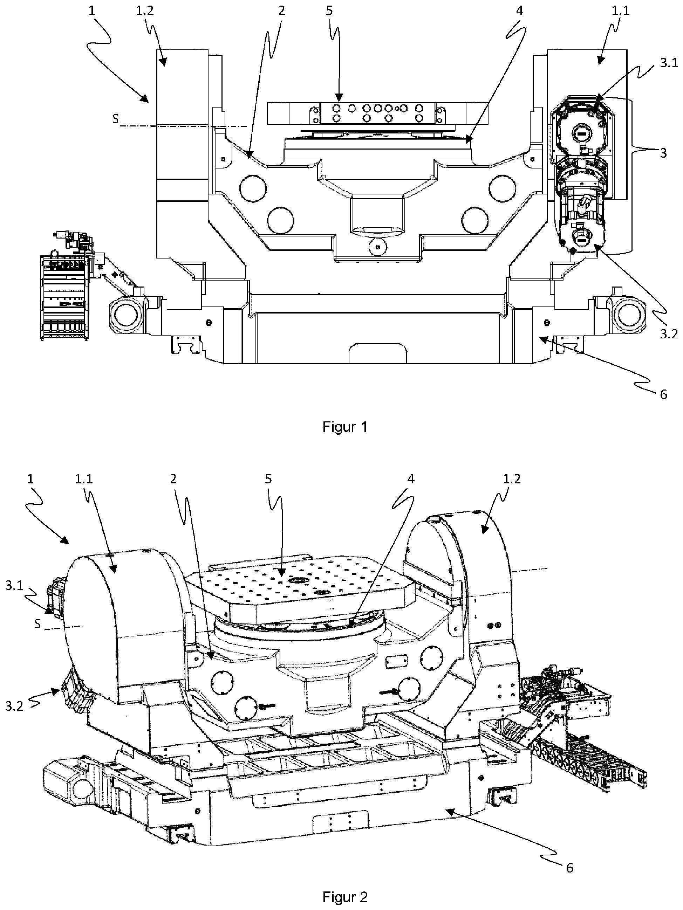

Eine Schwenkeinheit 1 in einer Vorderansicht ist in **Figur 1** dargestellt. Eine Darstellung der Schwenkeinheit gemäß **Figur 1** aus Richtung einer nicht dargestellten Frässpindel einer Werkzeugmaschine oder eines Bearbeitungszentrums ist in **Figur 2** dargestellt. Die Schwenkeinheit 1 weist einen Schwenkbalken 2 auf, der zwischen einem ersten Schenkel 1.1 und einem zweiten Schenkel 1.2 gelagert und um eine horizontal ausgerichtete Schwenkachse S schwenkbar ist. In dem ersten Schenkel 1.1 ist eine Antriebseinheit 3 für die Schwenkbewegung um die Schwenkachse S des Schwenkbalkens 2 mittels einer spiralverzahnten Kegelradstufe mit zwei Kegelritzeln vorgesehen.

Die Antriebseinheit 3 weist mindestens zwei Antriebsmotoren in Form eines ersten Antriebsmotors 3.1 und eines zweiten Antriebsmotors 3.2 auf, die im Bereich des ersten Schenkels 1.1 angeordnet sind. Auf dem Schwenkbalken ist ein Drehtisch 4 mit einer darauf montierten Palette 5 zum Aufspannen wenigstens eines Werkstücks angeordnet. Die Schwenkeinheit 1 ist in Form einer Dreh-Schwenk-Einheit für die 5-Achs-Bewegung eines Werkstücks ausgebildet.

Des Weiteren ist die Schwenkeinheit 1 auf einem Z-Schlitten 6 einer nicht dargestellten Werkzeugmaschine angeordnet und entlang der Z-Achse der Werkzeugmaschine verfahrbar.

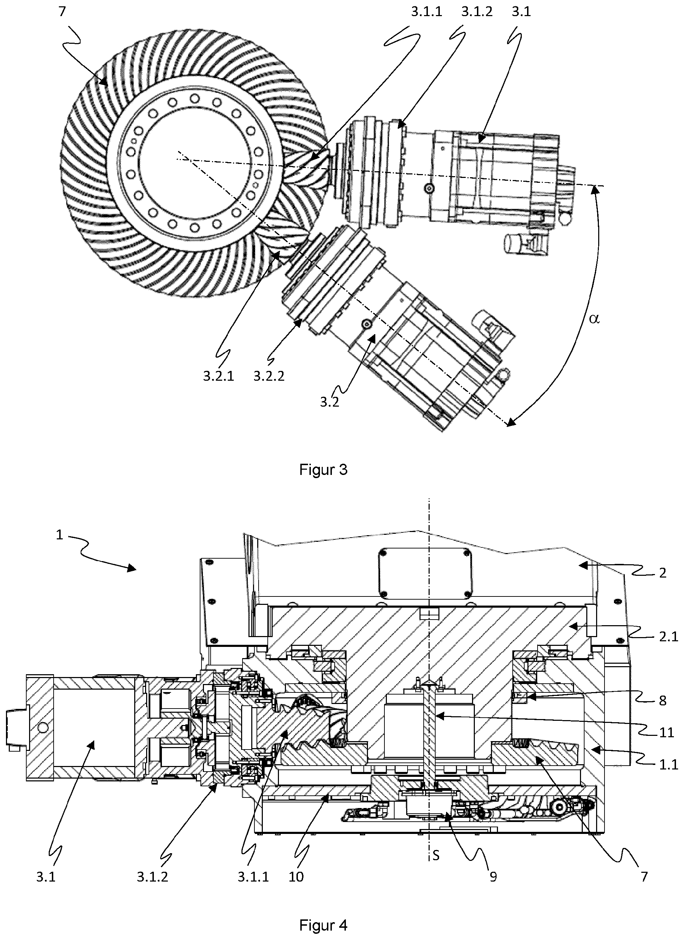

Die **Figur 3** zeigt eine Antriebseinheit 3 mit einem ersten Antriebsmotor 3.1 und einem zweiten Antriebsmotor 3.2, die v-förmig in einem spitzen Winkel a zueinander angeordnet sind.

Jedoch können die Antriebsmotoren 3.1, 3.2 auch in einem anderweitigen beliebigen Winkel zueinanderstehen, z.B. 90°, 180° oder davon abweichend.

Der kleinste Winkel a wird durch die Außenkonturen der Getriebegehäuse bestimmt.

Der erste Antriebsmotor 3.1 weist ein erstes Kegelritzel 3.1.1 und der zweite Antriebsmotor 3.2 ein zweites Kegelritzel 3.2.1 auf, die mit einem, mit dem nicht dargestellten Schwenkbalken verbundenen, gemeinsamen Tellerrad 7 in Eingriff stehen. Die Kegelritzel 3.2.1, 3.2.2 sind in Form von spiralverzahnten Kegelritzeln ausgebildet.

Die Antriebsmotoren 3.1, 3.2 sind bevorzugt gleich aufgebaut und weisen je ein Vorsatzgetriebe 3.1.2, 3.2.2 auf, mittels dessen eine hohe Leistungsdichte und eine reduzierte Motorleistung umsetzbar ist. Mittels des Tellerrades 7 erfolgt die Übertragung der Schwenkbewegung von der Antriebseinheit 3, bestehend aus dem ersten Antriebsmotor 3.1 und dem zweiten Antriebsmotor 3.2, zu dem nicht dargestellten Schwenkbalken. Die Antriebsmotoren 3.1, 3.2 der Antriebseinheit 3 sind elektronisch derart geregelt, dass sie miteinander verspannt sind, wodurch ein Getriebespiel des Kegelradgetriebes eliminiert wird. In die Antriebsmotoren 3.1 und 3.2 integriert ist jeweils einen Positionsgeber. Diese sind für den steuerungsinternen Regelkreis notwendig.

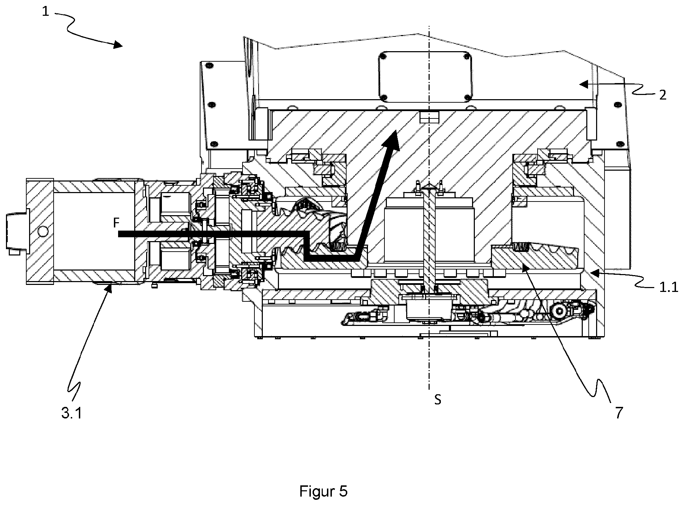

Eine Schnittdarstellung durch den ersten Schenkel 1.1 der Schwenkeinheit ist in der **Figur 4** dargestellt. Eine zugehörige Darstellung des Kraftflusses F innerhalb der Schwenkeinheit 1 ist in der **Figur 5** eingezeichnet.

Der erste Antriebsmotor 3.1 und der darunterliegende in dieser Darstellung nicht sichtbare zweite Antriebsmotor 3.2 weisen ein Vorsatzgetriebe 3.1.2, bevorzugt ein Planetengetriebe zur Reduzierung der Motorleistung auf. Das erste Kegelritzel 3.1.1 überträgt die Antriebskraft F des Antriebsmotors 3.1 mittels des vorgeschalteten Vorsatzgetriebes 3.1.2 auf das Tellerrad 7. Das Tellerrad 7 ist im ersten Schenkel 1.1 angeordnet und mit einer Antriebsachse 2.1 des Schwenkbalkens 2 verbunden, wobei die Schwenkbewegung um die Schwenkachse S auf den Schwenkbalken 2 übertragen wird.

Die Antriebseinheit 3 in Verbindung mit dem Tellerrad 7 wird mittels einer Dichtung 8 gegen die Antriebsachse 2.1 des Schwenkbalkens 2 abgedichtet.

Des Weiteren ist in dem ersten Schenkel 1.1 ein Messsystem 9 mit einem zugehörigen Halter 10 für das Messsystem angeordnet. Das Messsystem 9 ist über eine Mitnehmerwelle 11 mit der Antriebsachse 2.1 des Schwenkbalkens 2 zur Erfassung der Schwenkbewegung des Schwenkbalkens 2 um die Schwenkachse S verbunden.

Mit der vorliegenden Erfindung wird ein sehr hohes Antriebsmoment auf recht kompaktem Bauraum erzeugt. Es werden die spezifischen Vorteile der jeweiligen Antriebsarten miteinander kombiniert und die Nachteile durch die Anordnung der Elemente relativiert. Der Schwenkbalken kann mit der vorliegenden Erfindung spielfrei und ohne elastische Verformung durch die Anordnung der Antriebseinheit an nur einem Schenkel der Schwenkeinheit angetrieben werden.

In Kombination mit einem Planetengetriebe als Vorsatzgetriebe ergeben sich weitere Vorteile. So sorgt die höhere Antriebsteifigkeit von Zahnradgetrieben, im Vergleich zu Zykloidengetrieben, für einen spielfreien dynamischen Antrieb, auch im Simultanbetrieb. Da Zahnradgetriebe aber deutlich "weicher" sind als ein Direktantrieb, dämpft die Mechanik Stör- und Resonanzfrequenzen in Anteilen. Daraus folgt, dass über die Steuerung der Maschine deutlich weniger Filter erforderlich werden.

Ein Nachteil von Planetengetrieben ist beispielsweise die Überlastfähigkeit (je nach Baugröße) durch den immerwährenden Linienkontakt der Zahnräder untereinander. Dieser Nachteil wird minimiert, indem die hohen Kräfte erst an dem Kegelradgetriebe mit seinen aufeinander abrollenden Flächen erzeugt werden.

Der ruhige Lauf von spiralverzahnten Kegelradgetrieben sorgt ebenfalls dafür, dass Schwingungen aus dem Planetengetriebe, ausgehend aus den Zahnrädern, bedämpft werden. Diese Schwingungen sind auf hochgenauen spiegelnden Flächen als Schatten erkennbar.

### Bezugszeichenliste

- 1: Schwenkeinheit
- 1.1: erster Schenkel
- 1.2: zweiter Schenkel
- 2: Schwenkbalken
- 2.1: Antriebsachse
- 3: Antriebseinheit
- 3.1: erster Antriebsmotor
- 3.1.1: Kegelritzel
- 3.1.2: Vorsatzgetriebe / Planetengetriebe
- 3.2: zweiter Antriebsmotor
- 3.2.1: Kegelritzel
- 3.2.2: Vorsatzgetriebe / Planetengetriebe
- 4: Drehtisch
- 5: Palette
- 6: Z-Schlitten
- 7: Tellerrad
- 8: Dichtung
- 9: Messsystem
- 10: Halter
- 11: Mitnehmerwelle
- S: Schwenkachse

## Patentansprüche

1. Schwenkeinheit für eine Werkzeugmaschine zur Aufnahme wenigstens eines Werkstücks, wobei die Schwenkeinheit (1) einen Schwenkbalken (2) aufweist und der Schwenkbalken (2) um eine horizontal ausgerichtete Schwenkachse (S) schwenkbar ist und dazu an einem Endabschnitt der Schwenkeinheit (1) eine Antriebseinheit (3) zum schwenkbaren Antrieb des Schwenkbalken (2) um die horizontale Achse (S) vorgesehen ist, **dadurch gekennzeichnet, dass** die Antriebseinheit (2) mittels eines Kegelradgetriebes mit dem Schwenkbalken (2) verbunden ist, wobei die Antriebseinheit (3) mindestens einen ersten Antriebsmotor (3.1) mit einem ersten Kegelritzel (3.1.1) und mindestens einen zweiten Antriebsmotor (3.2) mit einem zweiten Kegelritzel (3.2.1) aufweist derart, dass das erste und zweite Kegelritzel (3.1.1, 3.2.1) mit einem, mit dem Schwenkbalken (2) verbundenen, Tellerrad (7) zur Übertragung der Schwenkbewegung von der Antriebseinheit (3) zum Schwenkbalken (2) in Eingriff stehen, wobei das Tellerrad (7) sowie die Antriebseinheit (3) an einer Seite des Schwenkbalkens (2) miteinander in Eingriff stehend zur Übertragung der Schwenkbewegung um die Schwenkachse (S) angeordnet sind und dass der erste Antriebsmotor (3.1) und der zweite Antriebsmotor (3.2) gegeneinander verspannt sind.

2. Schwenkeinheit nach Anspruch 1 oder 2, **dadurch gekennzeichnet, dass** das Kegelradgetriebe in Form eines Spiralkegelradgetriebes mit zwei spiralverzahnten Kegelritzeln (3.1.1, 3.2.1) ausgebildet ist.

3. Schwenkeinheit nach einem der vorangegangenen Ansprüche, **dadurch gekennzeichnet, dass** die Antriebsmotoren (3.1, 3.2) der Antriebseinheit (3) v-förmig zueinander angeordnet sind.

4. Schwenkeinheit nach einem der vorangegangenen Ansprüche, **dadurch gekennzeichnet, dass** der erste und/oder zweite Antriebsmotor (3.1, 3.2) ein Vorsatzgetriebe (3.1.2, 3.2.2) aufweist.

5. Schwenkeinheit nach Anspruch 6, **dadurch gekennzeichnet, dass** das Vorsatzgetriebe (3.1.2, 3.2.2) in Form eines Planetengetriebes (3.1.2, 3.2.2) ausgebildet ist.

6. Schwenkeinheit nach einem der vorangegangenen Ansprüche, **dadurch gekennzeichnet, dass** auf dem Schwenkbalken (2) ein Drehtisch (4) zur Aufnahme einer Palette (5) zum Aufspannen des wenigstens eines Werkstücks angeordnet ist.

7. Schwenkeinheit nach einem der vorangegangenen Ansprüche, **dadurch gekennzeichnet, dass** die Schwenkeinheit (1) auf einem Z-Schlitten (6) einer Werkzeugmaschine angeordnet ist.
